# EUROPÄISCHE PATENTSCHRIFT

(11) **EP 0 901 242 B1**
(45) Veröffentlichungstag und Bekanntmachung des Hinweises auf die Patenterteilung: **23.11.2005**
(21) Anmeldenummer: 98116941.0
(22) Anmeldetag: 05.09.1998
(51) Int. Cl.: H04B 7/26

(54) **Digitale Telekommunikationseinrichtung mit TDMA Verfahren**
TDMA digital telecommunication system
Système de télécommunication numérique TDMA

(30) Priorität: 08.09.1997 DE 19739264
(43) Veröffentlichungstag der Anmeldung: 10.03.1999
(73) Patentinhaber: Infineon Technologies AG, 81669 München (DE)
(72) Erfinder: Kranz, Christian, 40885 Ratingen Lintorf (DE); Heinen, Stefan, 47802 Krefeld (DE)
(74) Vertreter: Jannig, Peter

(56) Entgegenhaltungen:
- WO-A-96/02980
- WO-A-99/09678
- DE-A- 19 533 954
- CHIASSON G M ET AL: "Field measurements of a prototype slow frequency hop personal communication system" VEHICULAR TECHNOLOGY CONFERENCE, 1995 IEEE 45TH CHICAGO, IL, USA 25-28 JULY 1995, NEW YORK, NY, USA,IEEE, US, 25. Juli 1995 (1995-07-25), Seiten 118-124, XP010166907 ISBN: 0-7803-2742-X
- "Radio Equipment and Systems, Digital European Cordless Telecommunications (DECT), Reference Document" ETR 015, [Online] März 1991 (1991-03), Seiten 1-47, XP002240578 Gefunden im Internet: <URL:http://WEBAPP.ETSI.ORG/exchangefolder /etr_015e01p.pdf> [gefunden am 2003-05-07]

## Beschreibung

Die vorliegende Erfindung betrifft eine Vorrichtung gemäß dem Oberbegriff des Patentanspruchs 1.

Eine derartige Telekommunikationseinrichtung ist beispielsweise ein nach dem DECT-Standard arbeitendes Funksystem.

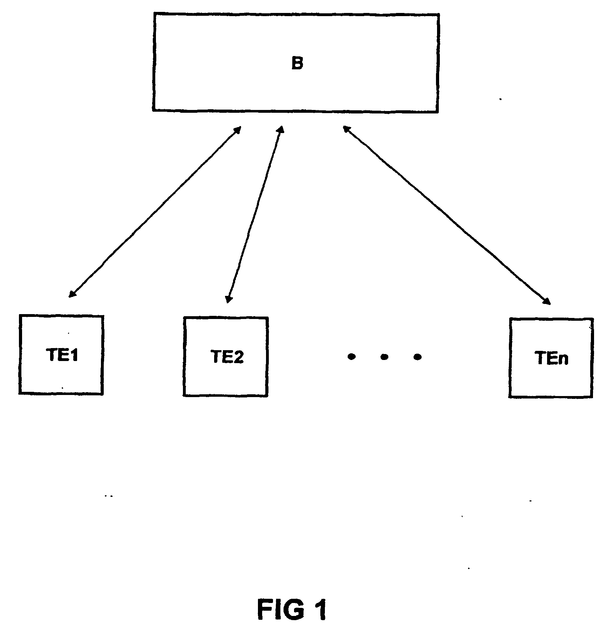

Der prinzipielle Aufbau eines solchen Funksystems ist in Figur 1 veranschaulicht.

Das in der Figur 1 gezeigte System besteht aus einer Basisstation B und mehreren schnurlosen Telekommunikationsendeinrichtungen TE1 bis TEn. Die schnurlosen Telekommunikationsendeinrichtungen TE1 bis TEn sind im betrachteten Beispiel Mobiltelefone, welche in der Lage sind, über Funk mit der Basisstation B zu kommunizieren.

Anstelle der schnurlosen Telekommunikationsendeinrichtungen TE1 bis TEn oder zusätzlich zu diesen können auch schnurlose Anschlußdosen zum Anschluß schnurgebundener Telekommunikationsendeinrichtungen zum Einsatz kommen. Die schnurlosen Telekommunikationsendeinrichtungen, die schnurlosen Anschlußdosen und vergleichbare Einrichtungen sind die eingangs bereits erwähnten Mobilteile.

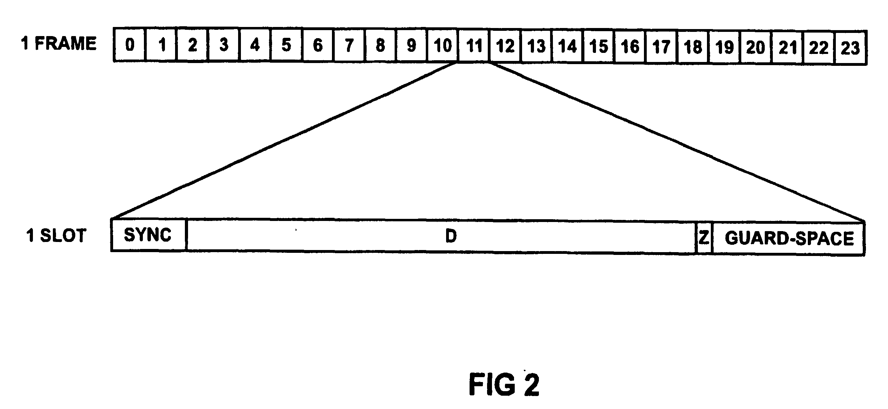

Die Datenübertragung zwischen der Basisstation B und den Mobilteilen erfolgt in Einheiten von sogenannten Frames, genauer gesagt TDMA-Frames, wobei TDMA für Time Division Multiple Access steht und besagt, daß die Frames so aufgebaut sind, daß die Basisstation in aufeinanderfolgenden Zeitschlitzen (sogenannten time slots bzw. slots) eines jeweiligen Frame der Reihe nach mit allen bei ihr eingebuchten Mobilteilen kommunizieren kann, und dies dann jeweils unter Ausnutzung der vollen Bandbreite des Übertragungskanals. Das TDMA-Verfahren ist hinlänglich bekannt und bedarf keiner weiteren Erläuterung. Der prinzipielle Aufbau eines zur Durchführung des TDMA-Verfahrens geeigneten (TDMA-)Frames wird nachfolgend anhand der Figur 2 erläutert.

Wie aus der Figur 2 ersichtlich ist, setzt sich ein solcher Frame, genauer gesagt der hier betrachtete DECT-Full-Slot-Frame aus 24 identisch langen Zeitschlitzen bzw. Slots (Full-Slots) zusammen. Die ersten 12 der 24 Slots werden von der Basisstation zu den Mobilteilen übertragen, und die sich daran anschließenden zweiten 12 Slots werden von den Mobilteilen zur Basisstation übertragen. Genauer gesagt werden der nullte Slot eines jedem Frame von der Basisstation zu einem nullten Mobilteil, der erste Slot von der Basisstation zu einem ersten Mobilteil, der zweite Slot von der Basisstation zu einem zweiten Mobilteil, ..., der elfte Slot von der Basisstation zu einem elften Mobilteil, und umgekehrt der zwölfte Slot vom nullten Mobilteil zur Basisstation, der dreizehnte Slot vom ersten Mobilteil zur Basisstation, der vierzehnte Slot vom zweiten Mobilteil zur Basisstation, ... und der dreiundzwanzigste Slot vom elften Mobilteil zur Basisstation übertragen.

Ein Frame bzw. die 24 Slots eines Frames werden innerhalb von 10 ms übertragen. Jeder Slot umfaßt 480 Bits wird in rund 417 µs (in 416,66 µs) übertragen. Wie in der Figur 3 angedeutet ist, verteilen sich die 480 Bits auf ein 32 Bits breites Sync-Feld, ein 388 Bits breites D-Feld, ein 4 Bits breites Z-Feld, und ein 56 Bits breites Guard-Space-Feld.

Für die Übertragung der eigentlich interessierenden Nutzdaten (beispielsweise Sprachdaten) sind 320 Bits innerhalb des D-Feldes reserviert. Die Basisstation kann also innerhalb von 10 ms 320 Bits umfassende Nutzdaten zu jedem der Mobilteile versenden und die gleiche Menge an Nutzdaten von jedem der Mobilteile empfangen; die Übertragungsrate für Nutzdaten zwischen der Basisstation und jedem der Mobilteile beträgt also 32 kBit/s in jede Richtung.

Die Sende-/Empfangsfrequenzen, die für den Informations- und Datenaustausch zwischen einer Basisstation B und den Mobiltelefonen TE1 ... TEn verwendet werden, sind aus insgesamt 10 verschiedenen Frequenzen auswählbar; sie werden in Abhängigkeit von den örtlichen Sende- und Empfangsverhältnissen durch die jeweiligen Mobilteile bestimmt und können sich aus diesem Grund von Slot zu Slot ändern.

Insbesondere die Basisstation, aber auch die Mobilteile, welche im folgenden der Einfachheit halber mit dem Oberbegriff "Funkteile" bezeichnet werden, müssen daher in der Lage sein, die Sende-/Empfangsfrequenz innerhalb kurzer Zeit zu ändern.

Zur Sende-/Empfangsfrequenzumstellung in den Funkteilen eines DECT-Systems gibt es mehrere verschiedene Möglichkeiten.

Eine dieser Möglichkeiten besteht darin, die Frequenzumstellung während der Dauer des vorstehend bereits erwähnten Guard-Space-Feldes eines jeweiligen Slots durchzuführen. Dies ist möglich, weil im Guard-Space-Feld keine Nutzdaten übertragen werden. Eine solche Frequenzumstellung ist jedoch wegen der Kürze der zur Verfügung stehenden Zeit nur mit einem verhältnismäßig großen Aufwand durchführbar.

Eine andere Möglichkeit besteht darin, für die Frequenzumstellung jeweils einen eigenen Slot, nämlich einen sogenannten Blind Slot zur Verfügung zu stellen (zu reservieren). Die Funkteile, in denen von dieser Möglichkeit der Frequenzumstellung Gebrauch gemacht wird, sind die sogenannten slow hopping Funkteile. Bei dieser Art von Funkteilen steht für eine gegebenenfalls erforderliche Umstellung der Sende/Empfangsfrequenz jeweils eine wesentlich längere Zeit zur Verfügung, wodurch sich die Funkteile erheblich einfacher aufbauen lassen. Andererseits kann dann jedoch nur mehr jeder zweite Slot eines Frame (beispielsweise die Slots mit den ungeradzahligen Nummern im Frame gemäß Figur 2) zur Datenübertragung verwendet werden, wodurch sich die Anzahl der an einer Basisstation betreibbaren Mobilteile auf die Hälfte reduziert.

Keine der genannten Möglichkeiten zur Umstellung der Sende-/Empfangsfrequenz ist optimal; in beiden Fällen sind Nachteile in Kauf zu nehmen, deren Beseitigung bzw. Kompensation mit einem erheblichen Aufwand verbunden ist.

Aus Chiasson G M et al.: "Field measurements of a prototype slow frequency hop personal communication system", Vehicular Technology Conference, Chicago, IL, USA, 25 - 28 July 1995, IEEE 1995, ISBN 0-7803-2742 X, Seiten 118 - 124 ist es ferner bekannt, die Sende-/Empfangsfrequenz nur ein Mal pro TDMA-Frame zu wechseln und die neue Sende-/Empfangsfrequenz für eine der Dauer eines TDMA-Frame entsprechende Zeit beizubehalten; in der genannten Druckschrift ist eine Vorrichtung gemäß dem Oberbegriff des Patentanspruchs 1 beschrieben.

Hierdurch vereinfacht sich zwar der Wechsel der Sende-/Empfangsfrequenz, doch kann dies andererseits zu einer deutlich wahrnehmbaren Verschlechterung der Übertragungsqualität führen. Aufgrund der vergleichsweise langen zusammenhängenden zeit, während welcher jeweils die selbe Sende-/Empfangsfrequenz verwendet wird, steigt die Wahrscheinlichkeit, daß die jeweils verwendete Sende-/Empfangsfrequenz während deren Verwendung zeitweise gestört ist. Als Folge hiervon ergibt sich eine deutlich wahrnehmbare Verschlechterung der Übertragungsqualität.

Weitere Telekommunikationseinrichtungen sind in der WO 96/02980 A, der DE 195 33 954 A, sowie in "Radio Equipment and Systems, Digital European Cordless Telecommunications (DECT), Reference Document", ETSI Technical Report ETR 015 beschrieben. Auch diesen Druckschriften sind jedoch keine Anregungen zur Lösung des vorstehend erwähnten Problems entnehmbar.

Der vorliegenden Erfindung liegt daher die Aufgabe zugrunde, die Telekommunikationseinrichtung gemäß dem Oberbegriff des Patentanspruchs 1 derart weiterzubilden, daß der zur Verstellung und Nachregelung der Sende-/Empfangsfrequenz zu treibende Aufwand auf ein Minimum reduzierbar ist, aber gleichzeitig keine wahrnehmbare Verschlechterung der Übertragungsqualtität auftritt.

Diese Aufgabe wird erfindungsgemäß durch die in Patentanspruch 1 beanspruchte digitale Telekommunikationseinrichtung gelöst.

Die seltenere Umstellung der Sende-/Empfangsfrequenz ermöglicht es, die hierfür pro Zeiteinheit zur Verfügung zu stellende Zeit zu reduzieren; es müssen - wenn überhaupt - weniger und/oder kürzere Slots für die Umstellung und/oder Nachregelung der Sende-/Empfangsfrequenzen reserviert werden.

Dadurch, daß die Mobilteile und die Basisstation dann, wenn die momentane Sende-/Empfangsfrequenz gestört ist, die Daten ausgeben, die sie im letzten ungestört empfangenen TDMA-Frame erhalten haben, führt die nur einmal pro Frame erfolgende Frequenzumstellung nicht nur zu einer wahrnehmbaren Verschlechterung der Übertragungsqualität. Ist nämlich die gerade benutzte Sende-/Empfangsfrequenz gestört, so sind es lediglich die Daten eines einzigen Frame, also beispielsweise 10 ms der zu übertragenden Informationen, die unter Umständen nicht fehlerfrei übertragen werden können. Eine oder mehrere solcher Unterbrechungen sind aber dann, wenn in dem gestörten Frame die im letzten Frame übertragenen oder zu übertragenden Informationen übertragen werden, nicht oder kaum registrierbar. Es wurde mithin eine Telekommunikationseinrichtung geschaffen, bei welcher der zur Verstellung und Nachregelung der Sende-/Empfangsfrequenz zu treibende Aufwand auf ein Minimum reduzierbar ist, ohne daß gleichzeitig keine wahrnehmbare Verschlechterung der Übertragungsqualtität auftritt.

Die regelmäßige Umstellung der Sende-/Empfangsfrequenz erweist sich auch noch in anderer Hinsicht als vorteilhaft: dadurch kann nämlich das Frequenzband, das für den Betrieb der Telekommunikationseinrichtung zur Verfügung steht, im wesentlich über dessen gesamte Breite gleichmäßig ausgenutzt werden; bei einer Frame-Länge von 10 ms können pro Sekunde 100 verschiedene Sende-/Empfangsfrequenzen verwendet werden. Der Betrieb der Telekommunikationseinrichtung erscheint im verwendeten Frequenzband im zeitlichen Mittel als ein breitbandiges Rauschen; die andere Einrichtungen besonders störende dauerhafte Verwendung einer bestimmten oder einiger weniger Frequenzen ist dadurch zuverlässig ausgeschlossen.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
- Figur 1: den Aufbau eines nach dem DECT-Standard arbeitenden Funksystems, und
- Figur 2: das Format der Daten, die zwischen einer Basisstation und mit dieser kommunizierenden Telekommunikationsendeinrichtungen eines nach dem DECT-Standard arbeitenden Funksystems ausgetauscht werden.

Die im folgenden näher beschriebene Telekommunikationseinrichtung ist wie ein nach dem DECT-Standard arbeitendes System eine digitale Telekommunikationseinrichtung mit einem oder mehreren schnurlosen Mobilteilen; sie ist allerdings zur Verwendung im sogenannten 2,4 GHz ISM-Band ausgelegt, welches sich von 2400 bis 2483,5 MHz erstreckt und von der FCC (Federal Communication Commision der U.S.A.) unter bestimmten Auflagen für den Betrieb derartiger Telekommunikationseinrichtungen freigegeben wurde.

Es sei bereits an dieser Stelle darauf hingewiesen, daß die erfindungsgemäße Telekommunikationseinrichtung nicht nur zur Verwendung im 2,4 GHz ISM-Band geeignet ist, sondern prinzipiell auch in beliebigen anderen Frequenzbändern zum Einsatz kommen kann.

Die Kommunikation zwischen den Mobilteilen und der Basisstation möge wie bei dem eingangs beschriebenen System über eine Vielzahl von Zeitschlitzen bzw. Slots umfassende TDMA-Frames erfolgen; die TDMA-Frames mögen auch wiederum eine Länge von jeweils 10 ms aufweisen. Der Aufbau und die Länge der Frames sind hierauf jedoch nicht beschränkt; sie sind auch beliebig anders festlegbar.

Die Übertragungsrate, mit welcher die einzelnen Bits der zu übertragenden Information übertragen werden, ist im betrachteten Beispiel gegenüber der Bitübertragungsrate der eingangs beschriebenen Telekommunikationseinrichtung halbiert, wodurch sich die pro Zeiteinheit übertragbare bzw. austauschbare Datenmenge entsprechend reduziert. Die Erfindung ist jedoch nicht nur bei Telekommunikationseinrichtungen mit dieser Bitübertragungsrate anwendbar, sondern kann grundsätzlich auch bei beliebigen anderen Bitübertragungsraten zum Einsatz kommen.

Unabhängig davon, aber ebenfalls anders als bei der eingangs beschriebenen Telekommunikationseinrichtung werden die Sende/Empfangsfrequenzen nur ein einziges Mal pro Frame gewechselt. Die gewählte Sende-/Empfangsfrequenz wird für die Kommunikation zwischen der Basisstation und allen angeschlossenen Mobilteilen verwendet; es kann nicht mehr jedes Mobilteil individuell festlegen, über welche Frequenz die Kommunikation mit der Basisstation erfolgen soll.

Es stehen mindestens 75, im betrachteten Beispiel sogar 90 Frequenzen zur Verfügung, die im Mittel gleich häufig verwendet werden.

Welche dieser Frequenzen jeweils als nächste Sende-/Empfangsfrequenz verwendet wird, genauer gesagt die Reihenfolge, in welcher die verfügbaren Frequenzen als Sende-/Empfangsfrequenz verwendet werden sollen, ist in einer Pseudo-Zufalls-Frequenzliste festgelegt, die sowohl in der Basisstation als auch in den Mobilteilen verfügbar ist.

Die Pseudo-Zufalls-Frequenzliste wird von der Basisstation und den Mobilteilen synchron sequentiell durchlaufen. D.h., bei den (in der Basisstation und den Mobilteilen gleichzeitig erfolgenden) Frequenzwechseln wird jeweils diejenige Frequenz als neue Sende-/Empfangsfrequenz verwendet, die durch den nächsten Eintrag in der Pseudo-Zufalls-Frequenzliste repräsentiert wird. Die Frequenzwechsel werden nicht durch verschlechterte Sende-/Empfangsverhältnisse ausgelöst, sondern erfolgen unabhängig davon frameweise zu vorgegebenen Zeitpunkten.

Sollte die angesprungene Frequenz gestört sein, so ändert sich dadurch am Betriebsablauf zumindest zunächst noch nichts; die Mobilteile und die Basisstation treffen sich infolge des synchronen Durchlaufens inhaltlich identischer Pseudo-Zufalls-Frequenzlisten nach einer gewissen Zeit (im nächsten oder einem späteren Frame) automatisch bei der (gemäß der Frequenzliste) nächsten ungestörten Frequenz wieder.

Die Basisstation und die Mobilteile sind im betrachteten Beispiel so ausgebildet, daß sie erkennen können, wenn die empfangenen Daten aufgrund der Verwendung einer gestörten Sende/Empfangsfrequenz fehlerhaft übertragen wurden oder sein können. In diesem Fall werden von der Basisstation bzw. den betreffenden Mobilteilen die zuletzt fehlerfrei erhaltenen Nutzdaten (beispielsweise Sprachdaten) ausgegeben. Auf diese Weise sind selbst Störungen, die sich über drei aufeinanderfolgende Frames erstrecken, ohne wahrnehmbare Ausfälle überbrückbar.

Länger andauernde Störungen können vermieden werden, wenn die Pseudo-Zufalls-Frequenzliste, so angelegt ist, daß zwischen aufeinanderfolgend als Sende-/Empfangsfrequenz zu verwendenden Frequenzen ein großer Frequenzabstand besteht. Dadurch wird die Gefahr reduziert, daß typische breitbandige Störer wie beispielsweise Mikrowellenöfen eine länger (mehrere aufeinanderfolgende Frames) andauernde Störung verursachen.

Die Mobilteile sind dazu ausgelegt, zum Verbindungsaufbau mit der Basisstation eine bestimmte Sende-/Empfangsfrequenz auszuwählen, über die sie die Verbindung zur Basisstation aufnehmen möchten. Die Auswahl erfolgt bei komfortablen Mobilteilen unter Verwendung einer Feldstärkemessung (RSSI(Radio Signal Strength Indication)-Messung); es wird eine Frequenz ausgewählt, die vom betreffenden Mobilteil mit hoher Feldstärke störungsfrei empfangen wird. Dadurch kann mit hoher Wahrscheinlichkeit erreicht werden, daß die erste Kontaktaufnahme zwischen dem betreffenden Mobilteil und der Basisstation störungsfrei vonstatten gehen kann. Bei einfacher aufgebauten Mobilteilen kann die Frequenz, über die die Kontaktaufnahme erfolgen soll, auch nach dem Zufallsprinzip ausgewählt werden.

Bei der wie auch immer ausgewählten Frequenz wartet das Mobilteil, bis ein sogenannter Sync-Bearer von der Basisstation empfangen wird. Der Sync-Bearer ist ein vorbestimmtes (Synchronisations-)Datenwort, das von der Basisstation in zur Datenübertragung ausgelegten Slots versandt wird, wenn und so lange die betreffenden Slots nicht dafür reserviert sind, mit in der Basisstation eingebuchten Mobilteilen zu kommunizieren. Ist nach einer vorbestimmten Zeit kein Sync-Bearer empfangen worden, wechselt das Mobilteil die Empfangsfrequenz und startet die Suche erneut.

Der Sync-Bearer wird innerhalb der betreffenden Slots mehrfach übertragen. Dadurch kann mit sehr großer Wahrscheinlichkeit verhindert werden, daß der erwartete Sync-Bearer nur deshalb nicht empfangen wird, weil das betreffende Mobilteil kurzzeitig nicht auf Empfang geschaltet ist.

Wenn das Mobilteil den Sync-Bearer empfangen hat (dies ist im Mittel nach spätestens ca. 0,5 s der Fall), kann es anhand der Pseudo-Zufalls-Frequenzliste der Basisstation frequenzmäßig folgen.

Bei einer Frame-Dauer von 10 ms werden die 90 verschiedenen Sende-/Empfangsfrequenzen in weniger als einer Sekunde durchsprungen. Die Folge hiervon ist, daß durch die beschriebene Telekommunikationseinrichtung in dem verwendeten bzw. zur Verfügung stehenden Frequenzband im zeitlichen Mittel ein breitbandiges Ausgangsspektrum erzeugt wird. Störungen, die darauf beruhen, daß dauerhaft ein und die selbe Frequenz oder wenige verschiedene Frequenzen benutzt werden, sind dadurch zuverlässig ausschließbar.

Bedingt durch die Tatsache, daß die Sende-/Empfangsfrequenz anders als bei dem eingangs beschriebenen System nicht mehr slotweise, sondern nur noch frameweise gewechselt wird und werden muß, können weniger oder kürzere Slots zur Umstellung und/oder Nachregelung der Sende-/Empfangsfrequenz vorgesehen werden. Dadurch ist der Zeitanteil, der pro Zeiteinheit (pro Frame) zum Nutzdatenaustausch zur Verfügung steht, relativ und absolut gesehen größer. Dies kann dazu genutzt werden, um die auszutauschenden Informationen in höherer Qualität zu übertragen oder (bei gleichbleibender Qualität) mehr Mobilteile an der Basisstation betreiben zu können.

Zusammenfassend kann abschließend festgestellt werden, daß der zur Verstellung und Nachregelung der Sende-/Empfangsfrequenz zu treibende Aufwand bei der beschriebenen Telekommunikationseinrichtung auf ein Minimum reduziert ist.

## Patentansprüche

1. Digitale Telekommunikationseinrichtung mit einem oder mehreren schnurlosen Mobilteilen (TEx), wobei die Mobilteile und eine Basisstation (B), mit welcher diese in Verbindung stehen oder treten können, dazu ausgelegt sind, nach dem TDMA-Verfahren zu kommunizieren, und wobei die Mobilteile und die Basisstation dazu ausgelegt sind, die Sende-/Empfangsfrequenz ein Mal pro TDMA-Frame zu wechseln und die neue Sende-/Empfangsfrequenz für eine der Dauer eines TDMA-Frame entsprechende Zeit beizubehalten,
**dadurch gekennzeichnet,**
**daß** die Mobilteile und die Basisstation dann, wenn die momentane Sende-/Empfangsfrequenz gestört ist, die Daten ausgeben, die sie im letzten ungestört empfangenen TDMA-Frame erhalten haben.

2. Telekommunikationseinrichtung nach Anspruch 1,
**dadurch gekennzeichnet,**
**daß** die Reihenfolge, in welcher die verschiedenen Sende/Empfangsfrequenzen aufeinanderfolgen, in in den Mobilteilen (TEx) und der Basisstation (B) verfügbaren Listen festgelegt ist.

3. Telekommunikationseinrichtung nach Anspruch 1 oder 2,
**dadurch gekennzeichnet,**
**daß** die Reihenfolge, in welcher die verschiedenen Sende/Empfangsfrequenzen aufeinanderfolgen, so festgelegt ist, daß die aufeinanderfolgend verwendeten Sende- bzw. Empfangsfrequenzen so weit voneinander entfernt sind, daß eine reduzierte Gefahr besteht, daß typische breitbandige Störer wie beispielsweise Mikrowellenöfen eine mehrere aufeinanderfolgende Frames andauernde Störung verursachen.

4. Telekommunikationseinrichtung nach einem der vorhergehenden Ansprüche,
**dadurch gekennzeichnet,**
**daß** die Mobilteile (TEx) die Sende-/Empfangsfrequenz, über die der Verbindungsaufbau zur Basisstation (B) erfolgen soll, individuell auswählen können.

5. Telekommunikationseinrichtung nach Anspruch 4,
**dadurch gekennzeichnet,**
**daß** die Sende-/Empfangsfrequenz unter Berücksichtigung einer RSSI- Messung ausgewählt wird.

6. Telekommunikationseinrichtung nach Anspruch 4 oder 5,
**dadurch gekennzeichnet,**
**daß** die Mobilteile (TEx) bei der ausgewählten Frequenz auf den Empfang eines Sync-Bearers der Basisstation (B) warten.

7. Telekommunikationseinrichtung nach Anspruch 6,
**dadurch gekennzeichnet,**
**daß** die Sende-/Empfangsfrequenz gewechselt wird, wenn innerhalb einer vorbestimmten Zeit kein Sync-Bearer empfangen wird.

## Claims

1. Digital telecommunication facility comprising one or more cordless mobile units (TEx), the mobile units and a base station (B) to which the former are or can be linked being designed for communicating in accordance with the TDMA process, and the mobile units and the base station are designed for changing the transmitting/receiving frequency once per TDMA frame and retaining the new transmitting/receiving frequency for a time corresponding to the duration of one TDMA frame, **characterized in that** if the instantaneous transmitting/receiving frequency is disturbed the mobile units and the base station output the data which they have received in the last TDMA frame received undisturbed.

2. Telecommunication facility according to Claim 1, **characterized in that** the order in which the various transmitting/receiving frequencies follow one another is specified in lists available in the mobile units (TEx) and in the base station (B).

3. Telecommunication facility according to Claim 1 or 2, **characterized in that** the order in which the various transmitting/receiving frequencies follow one another is specified in such a manner that the transmitting and receiving frequencies, respectively, used successively are so far apart from one another that there is a reduced risk that interference sources such as, for example, microwave ovens, which typically have a wide bandwidth, cause a disturbance lasting for several successive frames.

4. Telecommunication facility according to one of the preceding claims, **characterized in that** the mobile units (TEx) can individually select the transmitting/receiving frequency via which the connection is to be set up to the base station (B).

5. Telecommunication facility according to Claim 4, **characterized in that** the transmitting/receiving frequency is selected by taking into consideration an RSSI measurement.

6. Telecommunication facility according to Claim 4 or 5, **characterized in that** the mobile units (TEX) wait for the reception of a sync bearer of the base station (B) at the selected frequency.

7. Telecommunication facility according to Claim 6, **characterized in that** the transmitting/receiving frequency is changed if no sync bearer is received within a predetermined time.

## Revendications

1. Dispositif de télécommunications numérique comprenant une ou plusieurs parties mobiles sans fil (TEx), dans lequel les parties mobiles et une station de base (B), avec laquelle les parties mobiles peuvent être ou entrer en communication, sont conçues pour communiquer selon le procédé TDMA et dans lequel les parties mobiles et la station de base sont conçues pour changer la fréquence d'émission/réception une fois par trame de TDMA et maintenir la nouvelle fréquence d'émission/réception pour un temps correspondant à la durée d'une trame de TDMA,
**caractérisé en ce que** les parties mobiles et la station de base sortent, lorsque la fréquence d'émission/réception momentanée est perturbée, les données qu'elles ont obtenues dans la dernière trame de TDMA non perturbée, reçue.

2. Dispositif de télécommunications suivant la revendication 1, **caractérisé en ce que** la succession, suivant laquelle les différentes fréquences d'émission/réception se suivent, est fixée dans des listes disponibles dans les parties mobiles (TEx) et la station de base (B).

3. Dispositif de télécommunications suivant la revendication 1 ou 2, **caractérisé en ce que** la succession, suivant laquelle les différentes fréquences d'émission/réception se suivent, est fixée de façon que les fréquences d'émission et respectivement de réception utilisées successivement soient suffisamment éloignées l'une de l'autre pour qu'il n'y ait qu'un danger réduit que des éléments perturbateurs à large bande typiques, comme par exemple des fours à micro-ondes, provoquent une perturbation persistant pendant plusieurs trames successives.

4. Dispositif de télécommunications suivant l'une des revendications précédentes, **caractérisé en ce que** les parties mobiles (TEx) peuvent sélectionner individuellement la fréquence d'émission/réception par laquelle doit avoir lieu la structure de communication vers la station de base (B).

5. Dispositif de télécommunications suivant la revendication 4, **caractérisé en ce que** la fréquence d'émission/réception est choisie en tenant compte d'une mesure RSSI.

6. Dispositif de télécommunications suivant la revendication 4 ou 5, **caractérisé en ce que** les parties mobiles (TEx), à la fréquence sélectionnée, attendent la réception d'un porteur de synchronisation de la station de base (B).

7. Dispositif de télécommunication suivant la revendication 6, **caractérisé en ce que** la fréquence d'émission/réception est changée lorsque, au sein d'une période prédéterminée, aucun porteur de synchronisation n'est reçu.
